(19) **Europäisches Patentamt**
**European Patent Office**
**Office européen des brevets**

(11) **EP 4 667 926 A1**

(12) **EUROPEAN PATENT APPLICATION**
published in accordance with Art. 153(4) EPC

(43) Date of publication:
**24.12.2025  Bulletin 2025/52**

(21) Application number: **24757141.7**

(22) Date of filing: **08.02.2024**

(51) International Patent Classification (IPC):
**G01N 29/04** (2006.01)   **G01N 29/44** (2006.01)
**G01P 15/18** (2013.01)

(52) Cooperative Patent Classification (CPC):
**G01N 29/04; G01N 29/44; G01P 15/18**

(86) International application number:
**PCT/KR2024/001919**

(87) International publication number:
**WO 2024/172412 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2023  KR 20230018642**

(71) Applicant: **Korea Hydro & Nuclear Power Co., Ltd
Gyeongju-si, Gyeongsangbuk-do 38120 (KR)**

(72) Inventors:
• **LEE, Hong Pyo
  Daejeon 34101 (KR)**
• **KIM, Eunyoung
  Daejeon 34101 (KR)**
• **KANG, Jun Won
  Seoul 03711 (KR)**

(74) Representative: **Habermann, Hruschka &
Schnabel
Patentanwälte
Montgelasstraße 2
81679 München (DE)**

(54) **METHOD FOR DETECTING CAVITY IN STRUCTURE USING ELASTIC WAVES**

(57)     The present invention relates to a method for detecting a cavity in a structure using elastic waves, the method comprising the steps in which: a plurality of acceleration sensors capable of measuring acceleration in three axial directions are installed in the structure; a plurality of three-dimensional loads having elastic waves are applied near the acceleration sensors and three-dimensional accelerations are measured by the acceleration sensors; two-dimensional distributed load data is generated by superimposing the three-dimensional loads applied for each of the plurality of acceleration sensors; superimposed acceleration data is calculated by superimposing the measured three-dimensional accelerations; and the two-dimensional distributed load data and the superimposed acceleration data are applied to a two-dimensional elastic wave inverse analysis algorithm.

FIG. 2

□ : Acceleration sensor
✕ : Impact load

**Description**

**[TECHNICAL FIELD]**

The present disclosure relates to a method for detecting cavities within structures utilizing elastic wave analysis.

**[BACKGROUND ART]**

Although effective non-destructive testing techniques, such as impact echo methods, electromagnetic wave detection, and ultrasonic methods, have been developed to analyze defects in concrete walls of nuclear power plants, there remain no standardized methods specifically for the non-destructive evaluation of nuclear power plant structures.

Existing non-destructive evaluation methods primarily target top-layer damage assessments in bridge decks and road pavements. There are limited successful applications of these methods for inspecting the integrity of nuclear power plant containment buildings, which typically exceed one meter in thickness.

Current elastic wave-based non-destructive testing methods, including impact echo, impact response, and surface wave spectroscopy, primarily use travel-time tomography, estimating internal structural conditions based on wave arrival times. Such methods provide limited information regarding the continuous material properties within a target structure.

To ensure the safe and effective operation of nuclear power plant structures, there is a critical need for reliable diagnostic techniques capable of accurately detecting cavities within containment walls.

**[DETAILED DESCRIPTION OF INVENTION]**

**[TECHNICAL PROBLEMS]**

Therefore, the present disclosure aims to provide an improved method for accurately detecting cavities within structures using elastic wave analysis.

**[TECHNICAL SOLUTION]**

The present disclosure proposes a method for detecting cavities in structures using elastic waves, comprising the steps of: installing multiple acceleration sensors capable of measuring accelerations along three orthogonal axes within the structure; applying multiple three-dimensional loads generating elastic waves near these acceleration sensors and measuring the resulting three-dimensional accelerations; Creating two-dimensional distributed load data by superimposing the three-dimensional loads applied near each acceleration sensor; calculating combined acceleration data by superimposing measured three-dimensional accelerations; and applying the two-dimensional distributed load data and the combined acceleration data to a two-dimensional elastic wave inverse analysis algorithm.

The structure under inspection may specifically include containment buildings of nuclear power plants.

The acceleration sensors may be positioned at vertical intervals along the height of the containment building, with loads applied adjacent to both sides of each sensor.

The load may be applied using an impact hammer. The i-th distributed load $L_i$ can be calculated by:

$$L_i = \frac{1}{A} \sum_{j=1}^{N_L} I_{ij}$$

In this equation, A represents the cross-sectional area affected by the load, determined by multiplying the impact hammer tip diameter by the length of the load distribution. $I_{ij}$ denotes load data at the i-th acceleration sensor line and j-th impact position, and $N_L$ is the total number of loads at the i-th sensor line.

The superimposed acceleration mk at the k-th measurement location can be calculated as follows:

$$m_k = \sum_{i-1}^{N_S} \sum_{j-1}^{N_L} a_k^{ij}$$

In the above equation, $a^{ij}_k$ indicates the measured response from the k-th acceleration sensor when the load is applied to the i-th sensor line and the j-th impact position. Ns denotes the total number of acceleration sensor lines, and $N_L$ denotes the total number of loads at the i-th sensor line.

**[EFFECT OF INVENTION]**

An embodiment of the present disclosure provides an enhanced method for reliably detecting cavities in structures, significantly improving the accuracy and reliability of non-destructive structural evaluations.

**[BRIEF DESCRIPTION OF THE DRAWING]**

FIG. 1 is a flowchart illustrating a method for cavity detection according to an embodiment of the present disclosure.
FIG. 2 illustrates the arrangement of loads and acceleration sensors in the method for detecting cavities according to the embodiment of the present disclosure.
FIG. 3 illustrates a simulated distributed load application in the method for detecting cavities according to the embodiment of the present disclosure.
FIG. 4 illustrates distributed loads acting vertically on the analysis domain in the method for detecting cavities according to the embodiment of the present disclosure.
FIG. 5 illustrates the superimposed acceleration data in the method for detecting cavities according to the embodiment of the present disclosure.
FIG. 6 is a diagram illustrating elastic wave measurement and data superimposition.
FIG. 7 is a conceptual diagram illustrating elastic full waveform inversion analysis.

**[BEST MODE FOR CARRYING OUT THE INVENTION]**

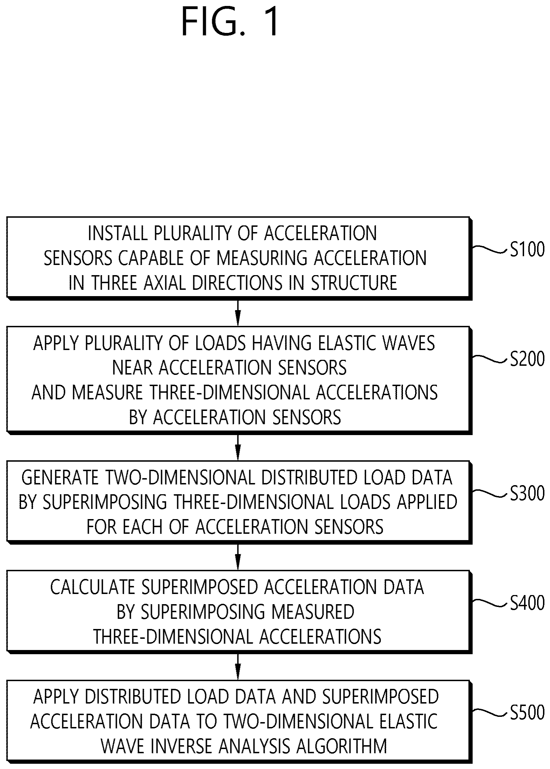

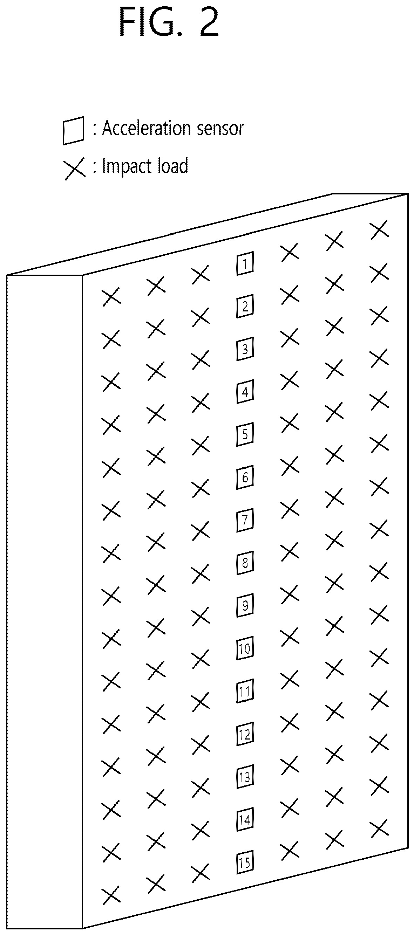

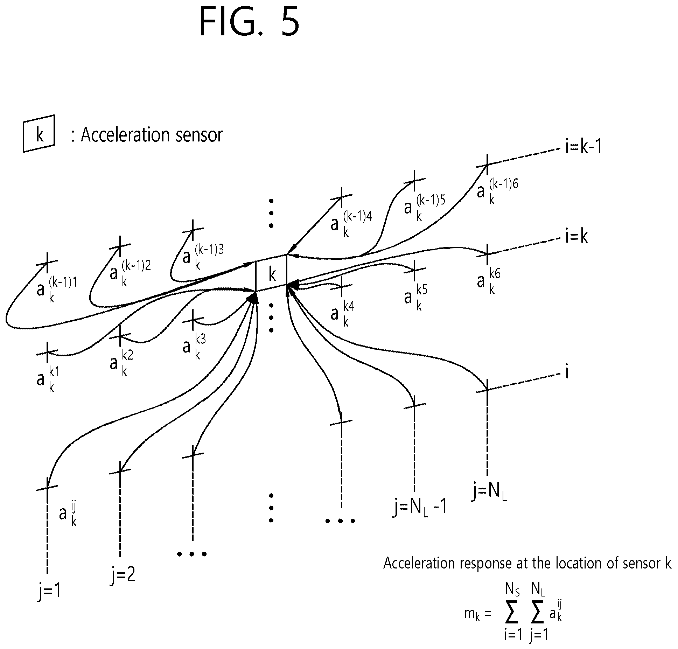

Hereafter, the present disclosure will be described in more detail with reference to the accompanying drawings.
The accompanying drawings are merely examples illustrated to more specifically explain the technical idea of the present disclosure, and accordingly, the idea of the present disclosure is not limited to the drawings. In addition, the dimensions and spacing in the drawings may be exaggerated to illustrate the relationships between components more clearly.
According to an embodiment, elastic waves are generated on the surface of a structure under evaluation, and the transmitted, reflected, and refracted acceleration responses are measured. Using the load time history and acceleration waveforms, elastic full-waveform inversion is performed to detect cavities within the structure.
In the following description, the nuclear power plant containment building is primarily referenced, but the disclosed method is applicable to general building structures, including reinforced concrete structures.
Sensor and load arrangements illustrated herein may be adapted as required for specific evaluation needs.
The method for detecting cavities according to an embodiment of the present disclosure will be described with reference to FIGS. 1 to 5.
First, multiple acceleration sensors capable of measuring acceleration in three orthogonal directions are installed on the structure (S100).
As shown in FIG. 2, 15 acceleration sensors may be attached at regular spacing in a vertical direction to a wall.
The acceleration sensor is a device that outputs an electrical signal proportional to acceleration within a certain frequency range. The acceleration sensors attached to the surface of the containment building wall measure instantaneous acceleration responses in the three directions. For example, the acceleration sensor may use 356A16 of PCB.
Next, multiple three-dimensional elastic wave loads are applied near the sensors, with resultant three-dimensional accelerations measured (S200).
Impact loads may be applied three times to both lateral sides with respect to each acceleration sensor, for a total of six times, as shown in FIG. 2. The spacing between the loads may be constant.
As such, there are a total of six impact loads, three on each side along the corresponding line of each acceleration sensor, and the impact loads are applied repeatedly to all lines of the acceleration sensors, for a total of 90 impact loads.
The loads may be applied sequentially, one at a time, or several or all at once.
The load may be applied using an impact hammer. The impact hammer is capable of generating elastic waves over a wide frequency range and may be used in a variety of directions and locations. Although not limited thereto, the impact hammer may use 086D20 of PCB.
Next, to apply the three-dimensional load data and measured acceleration responses applied to the surface of a nuclear power plant containment building wall to a two-dimensional elastic wave inversion algorithm, the load and acceleration time histories are superimposed, respectively. Herein, the order of superimposition of the load time history and the superimposition of the acceleration time history is not limited.

This will be described in detail as follows.

Two-dimensional distributed load data are generated by superimposing the three-dimensional loads applied for each of the acceleration sensors (S300). This stage is configured to superimpose surface loads.

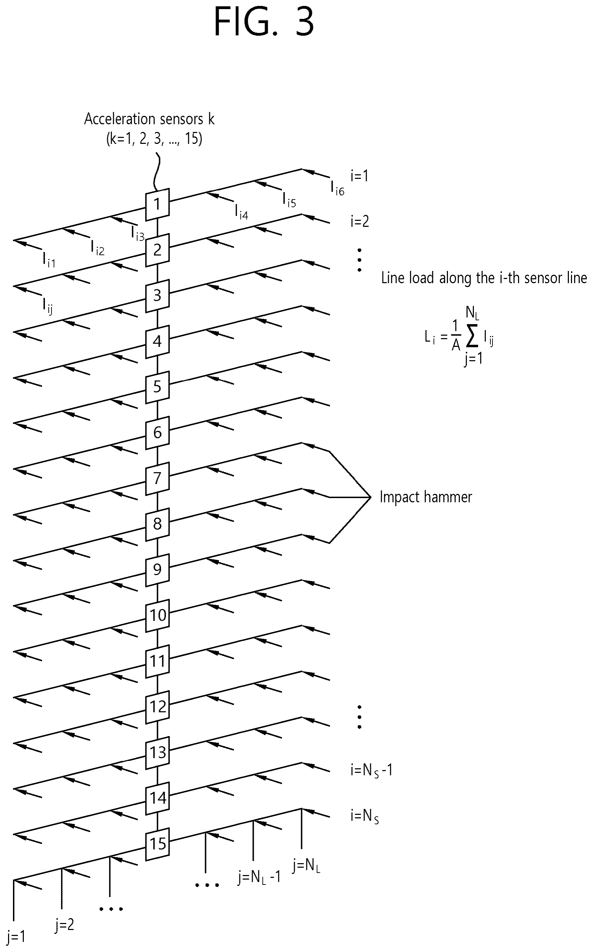

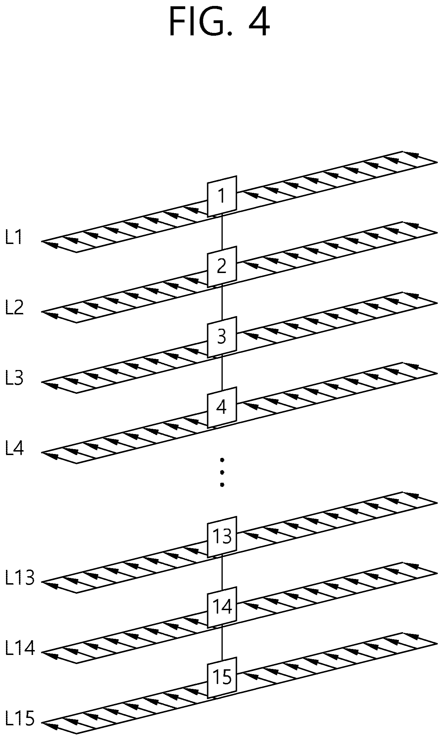

As shown in FIGS. 3 and 4, a two-dimensional analysis domain is assumed to have a constant elastic modulus and line loads in the direction perpendicular to the surface.

The data of the load applied by the impact hammer are extracted through a data collection device.

Six loads applied in a sensor line are added, and then divided by the cross-sectional area A to which the loads are applied, resulting in the superimposed distributed load Li for each sensor line.

$$L_i = \frac{1}{A} \sum_{j=1}^{N_L} I_{ij}$$

In the above equation, A is a cross-sectional area to which the loads are applied. It is calculated by multiplying the diameter of an impact hammer tip by the length of the applied load. $I_{ij}$ is the load data at the i-th acceleration sensor line and the j-th impact position, and $N_L$ is the total number of loads at the i-th sensor line.

An example of superimposing the surface loads is as follows:

$$i = 1,$$
$$L_1 = \frac{1}{A} \sum_{j=1}^{N_L} I_{1j}$$
$$= \frac{1}{A} \sum_{j=1}^{6} I_{1j}$$
$$= \frac{1}{A}(I_{11} + I_{12} + I_{13} + I_{14} + I_{15} + I_{16})$$

The superimposed line load $L^1$ applied to sensor line 1 is calculated by summing the 6 impact loads ($N_L$) applied to sensor line 1 and dividing the sum by the cross-sectional area on which the loads were applied.

A total of 15 superimposed line loads, each corresponding to one of the acceleration sensor lines, are applied as distributed loads in the direction perpendicular to the surface of a finite element analysis model.

Next, the measured three-dimensional accelerations are superimposed to obtain combined acceleration data (S400).

To utilize the three-dimensional field-measured responses in the two-dimensional elastic wave inversion algorithm, the measured acceleration responses must be superimposed. The superimposed acceleration response $m_k$ at the k-th measurement location is computed as follows.

$$m_k = \sum_{i-1}^{N_S} \sum_{j-1}^{N_L} a_k^{ij}$$

Herein, $a^{ij}_k$ represents the acceleration measured by the k-th acceleration sensor when the load is applied to the i-th sensor line at the j-th impact position. Ns is the total number of acceleration sensor lines, and $N_L$ is the number of impact loads per sensor line.

An example illustrating the superimposition process of measured responses is provided below.

$$k = 1:$$
$$m_1 = \sum_{i=1}^{N_s} \sum_{j=1}^{N_L} a_1^{ij}$$
$$= \sum_{i=1}^{15} \sum_{j=1}^{6} a_1^{ij}$$
$$= \sum_{i=1}^{15} \left( a_1^{i1} + a_1^{i2} + a_1^{i3} + a_1^{i4} + a_1^{i5} + a_1^{i6} \right)$$
$$= ( a_1^{11} + a_1^{12} + a_1^{13} + a_1^{14} + a_1^{15} + a_1^{16}$$
$$+ a_1^{21} + a_1^{22} + a_1^{23} + a_1^{24} + a_1^{25} + a_1^{26}$$
$$+ a_1^{31} + a_1^{32} + a_1^{33} + a_1^{34} + a_1^{35} + a_1^{36}$$
$$+ a_1^{41} + a_1^{42} + a_1^{43} + a_1^{44} + a_1^{45} + a_1^{46}$$
$$+ a_1^{51} + a_1^{52} + a_1^{53} + a_1^{54} + a_1^{55} + a_1^{56}$$
$$+ a_1^{61} + a_1^{62} + a_1^{63} + a_1^{64} + a_1^{65} + a_1^{66}$$
$$+ a_1^{71} + a_1^{72} + a_1^{73} + a_1^{74} + a_1^{75} + a_1^{76}$$
$$+ a_1^{81} + a_1^{82} + a_1^{83} + a_1^{84} + a_1^{85} + a_1^{86}$$
$$+ a_1^{91} + a_1^{92} + a_1^{93} + a_1^{94} + a_1^{95} + a_1^{96}$$
$$+ a_1^{101} + a_1^{102} + a_1^{103} + a_1^{104} + a_1^{105} + a_1^{106}$$
$$+ a_1^{111} + a_1^{112} + a_1^{113} + a_1^{114} + a_1^{115} + a_1^{116}$$
$$+ a_1^{121} + a_1^{122} + a_1^{123} + a_1^{124} + a_1^{125} + a_1^{126}$$
$$+ a_1^{131} + a_1^{132} + a_1^{133} + a_1^{134} + a_1^{135} + a_1^{136}$$
$$+ a_1^{141} + a_1^{142} + a_1^{143} + a_1^{144} + a_1^{145} + a_1^{146}$$
$$+ a_1^{151} + a_1^{152} + a_1^{153} + a_1^{154} + a_1^{155} + a_1^{156} )$$

A total of 90 impact loads were applied across the surface of the wall under investigation, involving 15 sensor lines ($N_L$) with 6 impact positions ($N_L$) each. The combined response $m_1$ at sensor location 1 is obtained by summing the 90 responses recorded at sensor 1 for all applied impact loads.

The process of superimposing impact loads and acceleration data is detailed further as follows.

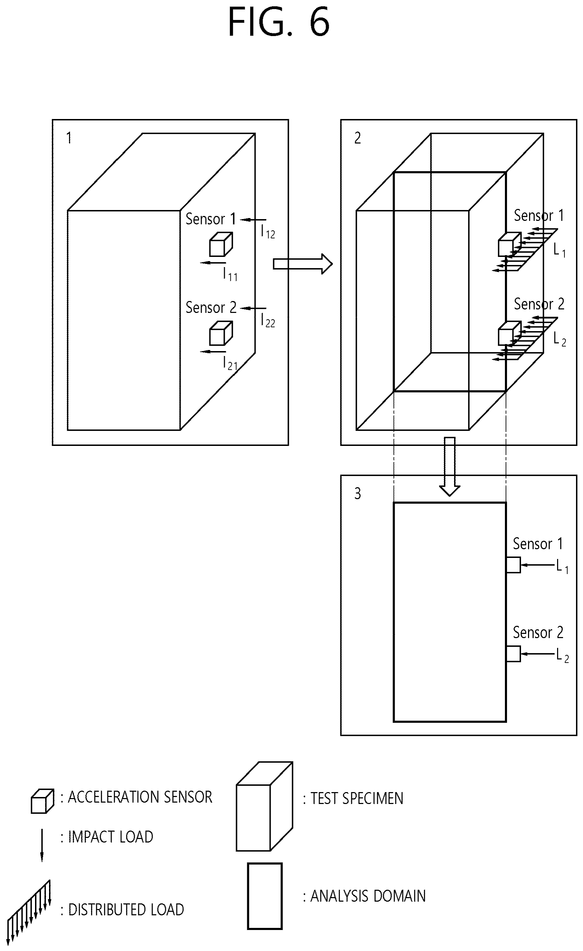

FIG. 6 is a diagram illustrating the measurement and superimposition of elastic waves and acceleration data.

The superimposition of the impact load and the acceleration data for the example presented in FIG. 6 may be summarized as shown in Table 1 below.

<Table 1>

| Superimposition of loads and acceleration (*see* FIG. 6) in the case where i=2, j=2, and k=2 | |
|---|---|
| 1. | - Apply impact loads ($I_{11}$ to $I_{22}$) individually.<br>- Acceleration responses to impact loads for each sensor are measured separately.<br>- For example, Sensor 1 (k=1) measures a total of four acceleration response time histories for $I_{11}$, $I_{12}$, $I_{21}$, and $I_{22}$. |
| 2. | - Three-dimensional impact loads (L) are superimposed to be replaced with two-dimensional distributed loads (L) (superimposition of loads)<br>- For example, $I_{11}$ and $I_{12}$ are replaced with the distributed load of $L_1$. |
| 3. | - The superimposed distributed load (L) is applied to the surface of the analysis domain. In this connection, multiple distributed loads are applied simultaneously to the surface of the analysis domain.<br>- The acceleration response calculated at the location of Sensor 1 due to $L_1$ and $L_2$ is equal to the sum of four acceleration responses measured at Sensor 1 due to $I_{11}$, $I_{12}$, $I_{21}$, and $I_{22}$ (Superimposition of acceleration). |

- Superimposition of Loads

Although the experiment is conducted on a three-dimensional structure, the inverse analysis algorithm assumes a two-dimensional plane strain condition; therefore the three-dimensional load data must be converted into two dimensional data.

In the inverse analysis algorithm, loads are applied simultaneously at multiple locations on the surface of the analysis domain. Since simultaneous application of multiple loads is impractical during experiments, loads are applied individually and their effects are subsequently superimposed.

Three-dimensional impact loads measured experimentally are converted into equivalent two-dimensional distributed loads using the process described above.

The superimposed distributed loads are used as two-dimensional uniformly distributed loads applied in the direction perpendicular to the surface of the analysis domain.

- Superimposition of Acceleration Responses

Through the experiment, acceleration responses resulting from individual impact loads are obtained, as shown in the item A of Table 2.

In the analysis domain, the equivalent two-dimensional distributed loads derived from experimental impact loads are simultaneously applied.

To perform inverse analysis, the acceleration response at each sensor location due to simultaneous distributed loads is required, as shown in item B of Table 2.

When distributed loads are applied simultaneously, the response calculated at a given sensor location equals the sum of all individual acceleration responses measured at that sensor location during the experiment.

The superimposed acceleration time history is compared with acceleration responses obtained from elastic wave propagation analysis to perform inverse analysis.

<Table 2>

| A. Four acceleration responses measured at Sensor 1 due to $I_{11}$, $I_{12}$, $I_{21}$, and $I_{22}$ (Experiment) |
|---|
| B. A single acceleration response calculated at Sensor 1 resulting from combined loads $L_1$ and $L_2$ (Analysis) |

Finally, the processed distributed load data and superimposed acceleration data are applied to the two-dimensional elastic wave inverse analysis algorithm (S500). This allows for determination of the material property distribution within the structure and the identification of cavities.

Elastic full-waveform inversion is a technique that utilizes complete measured waveforms including transmitted, reflected, and refracted waves within a structure to determine unknown system parameters through inverse analysis.

To detect cavities within nuclear power plant containment building walls using elastic wave responses, the walls are approximated as a two-dimensional elastic domain, and the elastic full-waveform inversion is performed.

The inverse analysis involves generating elastic waves on the surface of containment building walls, measuring these waves as they propagate and reflect internally, and estimating the distribution of material properties by minimizing the differences between measured and computed response waveforms.

Diagnosing cavities within nuclear power plant containment building walls requires: 1. performing elastic wave analysis in the time domain based on the containment wall geometry, and 2. exciting elastic waves and measuring responses on the containment building walls.

An embodiment of this disclosure pertains specifically to a method for applying 2. elastic wave excitation and response measurements of the nuclear power plant containment building walls and the measured data to the inverse analysis algorithm.

Algorithm for Elastic Full-Waveform Inversion Technique

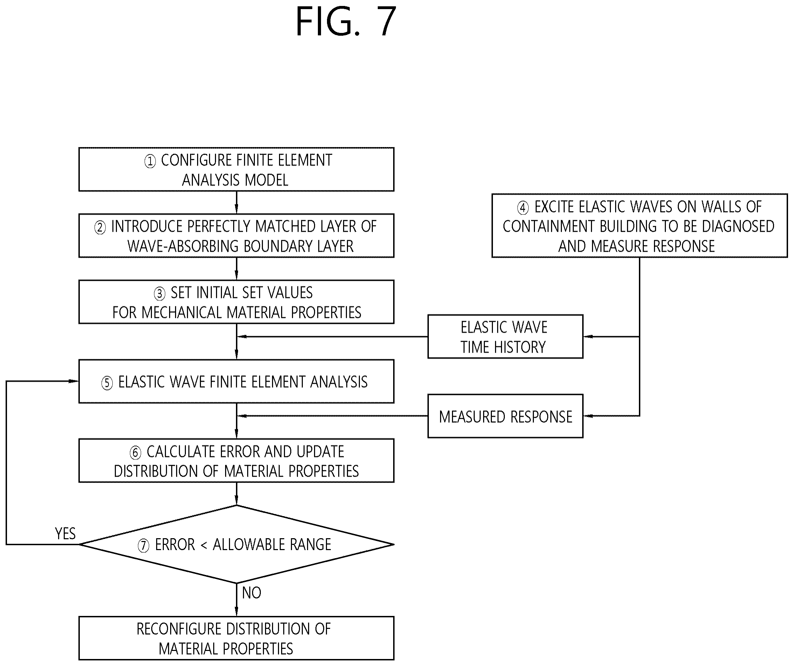

The flow of the inverse analysis is described with reference to FIG. 7 as follows.

① Configuring a two-dimensional finite element model for elastic wave analysis based on the geometry of the containment building walls to be diagnosed

② Restricting the analysis to a finite domain and implementing a perfectly matched layer at the boundaries to absorb outward-propagating waves and prevent artificial reflection

③ Assigning initial estimates for the spatial distribution of mechanical properties within the finite element model

④ Exciting elastic waves on the surface of the containment building walls using an impact hammer, and recording both the input load time history and the corresponding acceleration responses using appropriate data acquisition equipment

⑤ Applying the recorded surface load time history to the finite element model to simulate the propagation of elastic waves including transmitted, reflected, and refracted components within the structure

⑥ Updating the material property distribution of the finite calculation domain by incorporating the discrepancies between the computed response and the experimentally measured response into the inverse analysis algorithm

⑦ Repeating steps ⑤ and ⑥ iteratively to minimize the objective function representing the misfit between calculated and measured responses, thereby obtaining the optimal distribution of material properties inside the containment building walls.

The process of cavity detection using the elastic full-waveform inversion is described as follows.

Through the inverse analysis procedure, an optimal distribution of material properties (specifically the Lamé constants) within the nuclear power plant containment building wall can be determined.

If the estimated material properties within certain regions differ significantly from the known properties of the concrete used in the containment building, and are evaluated as notably lower than those of the surrounding areas, those regions may be identified as potential cavities.

B-Scan images of the containment building walls can be generated based on the reconstructed material property distribution. The generated monolayer image allows for identification of the location and geometry of cavities, as indicated by areas exhibiting abnormally low material property values.

An embodiment of the present disclosure provides a data processing method that utilizes experimentally acquired elastic wave data for two-dimensional inverse analysis under a plane strain assumption.

By applying three-dimensional experimental measurements to a two-dimensional full-waveform inversion, cavity detection may be performed for specific sections of concrete walls.

To assess the internal condition of thick concrete walls in nuclear power plant containment buildings, elastic waves, capable of transmitting more energy than ultrasonic or electromagnetic waves, may be employed to enhance diagnostic reliability.

The aforementioned embodiments are provided as examples to explain the present disclosure, and the present disclosure is not limited thereto. Since a person having ordinary skill in the technical field to which the present disclosure pertains will be able to implement the present disclosure by making various modifications therefrom, the technical protection scope of the present disclosure should be defined by the appended claims.

**Claims**

1.  A method for detecting a cavity in a structure using elastic waves, the method comprising:

    installing a plurality of acceleration sensors in the structure, each capable of measuring acceleration along three orthogonal axes;
    applying a plurality of three-dimensional impact loads that generate elastic waves in the vicinity of the acceleration sensors, and measuring the resulting three-dimensional acceleration responses using the sensors;
    generating two-dimensional distributed load data by superimposing the three-dimensional loads applied at each of the plurality of acceleration sensors;
    calculating superimposed acceleration data by aggregating the measured three-dimensional acceleration responses; and
    applying the two-dimensional distributed load data and the superimposed acceleration data to a two-dimensional elastic wave inverse analysis algorithm.

2.  The method of claim 1, wherein the structure comprises a containment building of a nuclear power plant.

3.  The method of claim 2, wherein:

    the plurality of acceleration sensors are spaced apart along a height direction of the containment building; and
    the load is applied to both side surfaces of each of the acceleration sensors.

4.  The method of claim 3, wherein:

    the load is applied using an impact hammer; and

an i-th distributed load $L_i$ from the distributed load data is obtained using the following equation:

$$L_i = \frac{1}{A} \sum_{j=1}^{N_L} I_{ij}$$

wherein, A is a cross-sectional area to which the load is applied, and is calculated by multiplying the diameter of an impact hammer tip by the length of the applied load distribution, $I_{ij}$ is the load data corresponding to the i-th acceleration sensor line and the j-th impact position, and $N_L$ is the number of loads applied at the i-th location of the acceleration sensor.

5. The method of claim 4, wherein, from the superimposed acceleration data, a superimposed acceleration mk at the k-th response measurement location is obtained using the following equation.

$$m_k = \sum_{i-1}^{N_S} \sum_{j-1}^{N_L} a_k^{ij}$$

wherein, $a^{ij}_k$ is the acceleration response measured at the k-th acceleration sensor when a load is applied to the i-th acceleration sensor line and the j-th impact position, Ns is the number of acceleration sensors, and $N_L$ is the number of loads applied at the i-th location of the acceleration sensor.

# FIG. 1

INSTALL PLURALITY OF ACCELERATION
SENSORS CAPABLE OF MEASURING ACCELERATION
IN THREE AXIAL DIRECTIONS IN STRUCTURE ——S100

APPLY PLURALITY OF LOADS HAVING ELASTIC WAVES
NEAR ACCELERATION SENSORS
AND MEASURE THREE-DIMENSIONAL ACCELERATIONS
BY ACCELERATION SENSORS ——S200

GENERATE TWO-DIMENSIONAL DISTRIBUTED LOAD DATA
BY SUPERIMPOSING THREE-DIMENSIONAL LOADS APPLIED
FOR EACH OF ACCELERATION SENSORS ——S300

CALCULATE SUPERIMPOSED ACCELERATION DATA
BY SUPERIMPOSING MEASURED
THREE-DIMENSIONAL ACCELERATIONS ——S400

APPLY DISTRIBUTED LOAD DATA AND SUPERIMPOSED
ACCELERATION DATA TO TWO-DIMENSIONAL ELASTIC
WAVE INVERSE ANALYSIS ALGORITHM ——S500

# FIG. 2

□ : Acceleration sensor

✕ : Impact load

# FIG. 3

Acceleration sensors k
(k=1, 2, 3, ..., 15)

Line load along the i-th sensor line

$$L_i = \frac{1}{A} \sum_{j=1}^{N_L} I_{ij}$$

Impact hammer

# FIG. 4

# FIG. 5

Acceleration response at the location of sensor k

$$m_k = \sum_{i=1}^{N_S} \sum_{j=1}^{N_L} a_k^{ij}$$

EP 4 667 926 A1

# FIG. 6

: ACCELERATION SENSOR

: IMPACT LOAD

: DISTRIBUTED LOAD

: TEST SPECIMEN

: ANALYSIS DOMAIN

# FIG. 7

① CONFIGURE FINITE ELEMENT ANALYSIS MODEL

② INTRODUCE PERFECTLY MATCHED LAYER OF WAVE-ABSORBING BOUNDARY LAYER

③ SET INITIAL SET VALUES FOR MECHANICAL MATERIAL PROPERTIES

⑤ ELASTIC WAVE FINITE ELEMENT ANALYSIS

⑥ CALCULATE ERROR AND UPDATE DISTRIBUTION OF MATERIAL PROPERTIES

YES

⑦ ERROR < ALLOWABLE RANGE

NO

RECONFIGURE DISTRIBUTION OF MATERIAL PROPERTIES

④ EXCITE ELASTIC WAVES ON WALLS OF CONTAINMENT BUILDING TO BE DIAGNOSED AND MEASURE RESPONSE

ELASTIC WAVE TIME HISTORY

MEASURED RESPONSE

EP 4 667 926 A1

## INTERNATIONAL SEARCH REPORT

International application No.

**PCT/KR2024/001919**

| A. | CLASSIFICATION OF SUBJECT MATTER |
|---|---|

**G01N 29/04**(2006.01)i; **G01N 29/44**(2006.01)i; **G01P 15/18**(2006.01)i

According to International Patent Classification (IPC) or to both national classification and IPC

| B. | FIELDS SEARCHED |
|---|---|

Minimum documentation searched (classification system followed by classification symbols)

G01N 29/04(2006.01); G01B 7/16(2006.01); G01N 29/12(2006.01); G01N 29/14(2006.01); G01P 15/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄성파(elastic wave), 구조물(structure), 공동(cavity), 탐사(exploration), 가속도 (acceleration), 하중(load), 역해석(inverse analysis), 알고리즘(algorithm)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 한국시설안전공단, 도심지 싱크홀 탐지를 위한, FULL WAVEFORM INVERSION을 채택하는 탄성파탐사기법 개발. 한국시설안전공단. February 2017, non-official translation (Korea Infrastructure Safety Corporation Develops a Seismic Wave Exploration Technique that Adopts FULL WAVEFORM INVERSION to Detect Sinkholes in Urban Areas. Korea Infrastructure Safety Corporation.) <br> See pages 47-114, table 3.2 and figures 3.6 and 5.10. | 1-5 |
| X | 김은영 등. 라이너 플레이트 및 콘크리트 공동을 고려한 원전 격납건물 벽체의 탄성파 전파 해석. 한국전산구조공학회 논문집. vol. 34, no. 3, 30 June 2021 (KIM, Eunyoung et al. Elastic Wave Propagation in Nuclear Power Plant Containment Building Walls Considering Liner Plate and Concrete Cavity. Proceedings of Computational Structural Engineering Institute of Korea.) <br> See pages 167-173. | 1-5 |
| A | KR 10-2021-0079515 A (DONG-A UNIVERSITY RESEARCH FOUNDATION FOR INDUSTRY-ACADEMY COOPERATION) 30 June 2021 (2021-06-30) <br> See claims 1-4 and figures 1-4. | 1-5 |

| ✓ Further documents are listed in the continuation of Box C. | | ✓ See patent family annex. |
|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 May 2024** | **16 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/001919**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0155065 A (KOREA ADVANCED INSTITUTE OF SCIENCE AND TECHNOLOGY) 22 December 2021 (2021-12-22)<br>See claim 1 and figures 1-5. | 1-5 |
| A | JP 6368039 B2 (KABUSHIKI KAISHA TOSHIBA et al.) 01 August 2018 (2018-08-01)<br>See paragraphs [0007]-[0034] and figures 1-5. | 1-5 |

Form PCT/ISA/210 (second sheet) (July 2022)

## INTERNATIONAL SEARCH REPORT
### Information on patent family members

International application No.

**PCT/KR2024/001919**

| Patent document cited in search report | | | Publication date (day/month/year) | Patent family member(s) | | | Publication date (day/month/year) |
|---|---|---|---|---|---|---|---|
| KR | 10-2021-0079515 | A | 30 June 2021 | KR | 10-2282400 | B1 | 26 July 2021 |
| KR | 10-2021-0155065 | A | 22 December 2021 | CN | 115698625 | A | 03 February 2023 |
| | | | | KR | 10-2387166 | B1 | 18 April 2022 |
| | | | | US | 2023-0105833 | A1 | 06 April 2023 |
| | | | | WO | 2021-256749 | A1 | 23 December 2021 |
| JP | 6368039 | B2 | 01 August 2018 | CN | 107850577 | A | 27 March 2018 |
| | | | | CN | 107850577 | B | 15 December 2020 |
| | | | | CN | 107850578 | A | 27 March 2018 |
| | | | | CN | 107850578 | B | 25 June 2021 |
| | | | | EP | 3290915 | A1 | 07 March 2018 |
| | | | | EP | 3290915 | B1 | 15 July 2020 |
| | | | | EP | 3293517 | A1 | 14 March 2018 |
| | | | | EP | 3719491 | A1 | 07 October 2020 |
| | | | | JP | 2018-165725 | A | 25 October 2018 |
| | | | | JP | 6386175 | B2 | 05 September 2018 |
| | | | | JP | 6871201 | B2 | 12 May 2021 |
| | | | | US | 10345275 | B2 | 09 July 2019 |
| | | | | US | 10613060 | B2 | 07 April 2020 |
| | | | | US | 2017-0363586 | A1 | 21 December 2017 |
| | | | | US | 2017-0363587 | A1 | 21 December 2017 |
| | | | | WO | 2017-217033 | A1 | 21 December 2017 |
| | | | | WO | 2017-217034 | A1 | 21 December 2017 |

Form PCT/ISA/210 (patent family annex) (July 2022)